Europäisches Patentamt

European Patent Office

Office européen des brevets

(11) Numéro de publication: **0 246 973**
**A1**

## DEMANDE DE BREVET EUROPEEN

(21) Numéro de dépôt: 87401135.6

(22) Date de dépôt: 20.05.87

(51) Int. Cl.⁴: **G 06 K 19/06**

(30) Priorité: 21.05.86 FR 8607241

(43) Date de publication de la demande:
25.11.87 Bulletin 87/48

(84) Etats contractants désignés:
AT BE CH DE ES FR GB GR IT LI LU NL SE

(71) Demandeur: **Michot, Gérard, Jacques, Guy**
**90 Avenue du Maine**
**Paris 14ème (FR)**

**Morisset, Maurice Claude**
**25 Rue Ferdinand Lot**
**Le Plessis Robinson Hauts de Seine (FR)**

(72) Inventeur: **Michot, Gérard, Jacques, Guy**
**90 Avenue du Maine**
**Paris 14ème (FR)**

**Morisset, Maurice Claude**
**25 Rue Ferdinand Lot**
**Le Plessis Robinson Hauts de Seine (FR)**

(74) Mandataire: **Rataboul, Michel**
**Cabinet Michel Rataboul 69, rue de Richelieu**
**F-75002 Paris (FR)**

(54) Objet associé à un élément électronique et procédé d'obtention.

(57) L'objet 5 est associé à des éléments électroniques tels que circuit intégré 1 et connexions, destinés à intervenir par interaction avec des appareils électroniques extérieurs.

Il est caractérisé en ce que les éléments électroniques sont reliés directement à des contacts 2-3 qui sont co-planaires entre eux et à une face de l'objet 5 et qui sont solidaires d'un socle rigide 4 devant être occlus dans la matière constitutive de l'objet 5, lesdits éléments électroniques étant ainsi reliés aux contacts 2, les contacts 2 solidaires du socle 4 et le socle 4 fixé à l'objet 5.

Selon un mode de réalisation particulier, les contacts proprement dits 2 font partie d'une feuille mince qui est renforcée par une plaque 3.

Selon un autre mode de réalisation, les contacts 2 et le socle 4 sont en une seule pièce.

FIG.1

EP 0 246 973 A1

Bundesdruckerei Berlin

## Description

### OBJET ASSOCIE A UN ELEMENT ELECTRONIQUE ET PROCEDE D'OBTENTION

On sait qu'il est de plus en plus courant d'utiliser des éléments électroniques, tels que des mémoires ou des processeurs, associés à des objets portatifs et notamment à des cartes en matière semi-rigide dites "cartes à mémoire".

La fixation des éléments électroniques à l'objet se fait actuellement par des moyens qui ne donnent pas entière satisfaction, surtout lorsque l'objet est destiné à être utilisé très souvent, ce qui est par exemple le cas des cartes à mémoire utilisées avec des installations de contrôle d'accès : garages, locaux protégés etc. D'autres applications impliquent aussi de grandes contraintes aux cartes : cartes bancaires, cartes d'abonnement etc.

En effet, généralement, les éléments électroniques ou "puce" et ses connexions sont associés pour constituer un ensemble ou "module" placé et collé dans une cavité de l'objet.

Lorque l'objet est une carte en matériau semi-rigide, il peut se plier élastiquement, alors que le module est pratiquement indéformable, ce qui signifie qu'en cas de pliage léger et fréquent ou énergique et rare, le module se décolle et se trouve ainsi désolidarisé de l'objet.

D'autres sollicitations que des pliages de l'objet sont également à l'origine d'un décollement : frottements sur les têtes de lecture des contacts, chutes, introductions maladroites dans une fente d'un appareil de lecture, etc. et ces risques sont évidemment multipliés lorsque l'objet est utilisé fréquemment.

Lorsque l'objet est utilisé rarement, on peut se contenter d'une fixation médiocre mais ce n'est plus le cas pour des objets devant être utilisés au moins une fois par jour, tels que les cartes qui donnent accès à des locaux, des garages, etc.

Afin de bien délimiter la présente invention, il faut la rapprocher des éléments de l'état de la technique ci-après :

- le brevet FR-A-2 337 381 qui décrit une carte associée à des éléments électroniques dont les contacts sont ponctuels et situés dans l'épaisseur de la carte. Les éléments électroniques sont épais et ce brevet enseigne à compenser la surépaisseur qu'ils provoquent en créant un bossage de même hauteur que celle de signes dont la surface de la carte est munie.

La présente invention est différente, car elle prévoit que les contacts s'étendent sur une surface assez grande, co-planaire à la surface de la carte, et qu'ils sont solidaires d'un socle de plus grande étendue, noyé dans l'épaisseur de la carte.

- le brevet FR-A-2 538 930 qui décrit une carte associée à des éléments électroniques enfermés dans une boîtier qui peut être fixé à la carte sans aucun traitement de plastification. De la sorte, le boîtier en entier peut être fixé à la carte après fabrication de celle-ci et peut aussi être démonté pour être remplacé par un autre.

La carte possède un trou et des rainures dont l'extrémité forme une entrée qui débouche à la surface de la carte. En conséquence, la matière constitutive de la carte entoure le boîtier avec une solution de continuité constituée par cette ouverture.

Selon ce brevet, les éléments électroniques sont placés dans un boîtier et il n'est prévu aucun moyen, bien au contraire, pour empêcher que ce boîtier soit désolidarisé de la carte.

La présente invention diffère complètement de celle décrite dans ce brevet car elle prévoit l'absence de boîtier et l'accrochage aussi robuste que possible des éléments électroniques sur la carte pour s'opposer à leur arrachage accidentel.

- le brevet EP-A-0 071 311 qui décrit une carte associée à des éléments électroniques munis de contacts qui n'apparaissent pas directement à la surface de la carte et qui sont reliés à des contacts indépendants par un élément conducteur tel qu'une feuille conductrice métallisée. Il n'est prévu aucun socle rigide.

La présente invention diffère complètement de celle décrite dans ce brevet car elle prévoit la présence obligatoire d'un socle rigide pour la fixation robuste des éléments électroniques à la carte elle-même.

- le brevet FR-A-2 503 902 qui prévoit d'une part de protéger les éléments électroniques en les associant à un élément porteur séparé et d'autre part de protéger la carte en la renforçant dans la zone qui entoure cet élément porteur car celui-ci impose des contraintes à la carte.

En effet, selon ce brevet, l'élément porteur est un blindage rigide qui abime la carte quand celle-ci est pliée et il faut, donc renforcer la carte.

Pour cela, il est enseigné de disposer autour de l'élément porteur un élément d'ancrage solide mais flexible (sous forme d'une feuille, par exemple renforcée de fibres de verre) pour pouvoir suivre les déformations de la carte tout en préservant celle-ci contre les efforts dus à la présence de l'élément porteur.

La présente invention s'écarte tout à fait des inventions décrites dans les brevets ci-dessus en prévoyant non pas une protection de la carte mais une fixation rigide très sûre des éléments électroniques sur la carte, mettant ainsi ces éléments à l'abri d'incidents grâce à sa robustesse; en outre, la structure conforme à l'invention n'exige pas la présence d'un élément porteur du circuit intégré.

Selon l'invention, on s'oppose au pliage de la carte aux endroits critiques, alors que jusqu'à maintenant on autorise ce pliage et l'on renforce la carte pour qu'elle supporte les contraintes qui en découlent.

L'invention permet de généraliser l'usage d'ensembles électroniques à toutes les applications possibles, y compris celles qui supposent un emploi intensif, grâce au fait que les éléments électroniques, ramenés à l'essentiel pour être peu volumineux, sont à l'abri d'un arrachage accidentel.

A cette fin, l'invention concerne un objet associé à des éléments électroniques tels que circuit intégré et connexions, destinés à intervenir par interaction avec des appareils électroniques extérieurs, caractérisé en ce que les éléments électroniques sont reliés directement à des contacts qui sont co-planaires entre eux et à une face de l'objet et qui sont solidaires d'un socle rigide devant être occlus dans la matière constitutive de l'objet, lesdits éléments électroniques étant ainsi reliés aux contacts, les contacts solidaires du socle et le socle fixé à l'objet.

Selon d'autres caractéristiques de cet objet :
- les contacts proprement dits font partie d'une feuille mince qui est renforcée par une plaque;
- les contacts et le socle sont en une seule pièce;
- les contacts sont situés sur la face supérieure d'un ensemble conformé pour présenter des flancs déterminant un espace inférieur médian dans lequel un circuit intégré doit être placé, et des ailes constituant ensemble un socle;
- les contacts s'étendent sur toute la longueur de l'objet sous forme de bandes conductrices linéaires;
- le socle a une étendue plus grande que celle du ou des contacts;
- le socle est séparé du ou des contacts par une partie de plus faible étendue;
- l'objet est constitué par plusieurs feuilles assemblées dont une continue est située sous l'ensemble éléments électronique-socle et une autre, est traversée d'un trou de même étendue que celle des contacts et est située au-dessus du socle;
- l'objet étant constitué en matière synthétique, l'ensemble éléments électroniques-socle est noyé dans la masse de ladite matière synthétique;
- le socle est traversé par au moins un trou;
- le socle est muni d'au moins un relief;
- l'un au moins des reliefs a une hauteur sensiblement égale à celle des contacts.

L'invention porte également sur un procédé pour la fabrication d'un objet du type ci-dessus, caractérisé en ce que l'on constitue un ensemble en associant au moins un composant tel qu'un circuit intégré, des contacts extérieurs et un socle puis que l'on positionne cet ensemble dans un moule, de telle sorte que la surface extérieure des contacts soit contre une paroi du moule, puis que l'on injecte, de manière connue en soi, une matière synthétique dans le moule pour enrober l'ensemble à l'exception de la face extérieure des contacts, puis que l'on procède éventuellement à des vérifications électroniques, puis que l'on termine l'objet notamment par une impression de mentions, décors, repères et analogues.

L'invention sera mieux comprise par la description détaillée ci-après faite en référence au dessin annexé. Bien entendu, la description et le dessin ne sont donnés qu'à titre indicatif et non limitatif.

La figure 1 est une vue en coupe d'un objet conforme à l'invention constitué par une carte associée à des éléments électroniques.

La figure 2 est une vue schématique en coupe qui illustre un procédé de fabrication de la carte de la figure 1.

La figure 3 est une vue schématique illustrant un autre procédé d'obtention de la carte de la figure 1.

Les figures 4 et 5 sont des vues schématiques en perspective d'un ensemble conforme à l'invention, destiné à être incorporé à un objet constitué par une carte, par moulage de matière synthétique, selon deux variantes différentes.

La figure 6 est une vue schématique en coupe d'une carte conforme à l'invention, associée à un ensemble électronique du type de celui représenté sur la figure 4.

La figure 7 est une vue schématique en coupe d'une carte conforme à l'invention, associée à un ensemble électronique du type de celui représenté sur la figure 5.

La figure 8 est une vue schématique partielle en coupe montrant une variante de réalisation.

La figure 9 est une vue schématique en coupe d'une carte conforme à l'invention, associée à un ensemble dont les contacts sont fixés directement au socle.

La figure 10 est une vue schématique en perspective d'une variante selon laquelle les contacts et le socle sont en une seule pièce.

La figure 11 est une vue schématique en perspective d'une carte réalisée selon l'invention et comprenant des contacts linéaires.

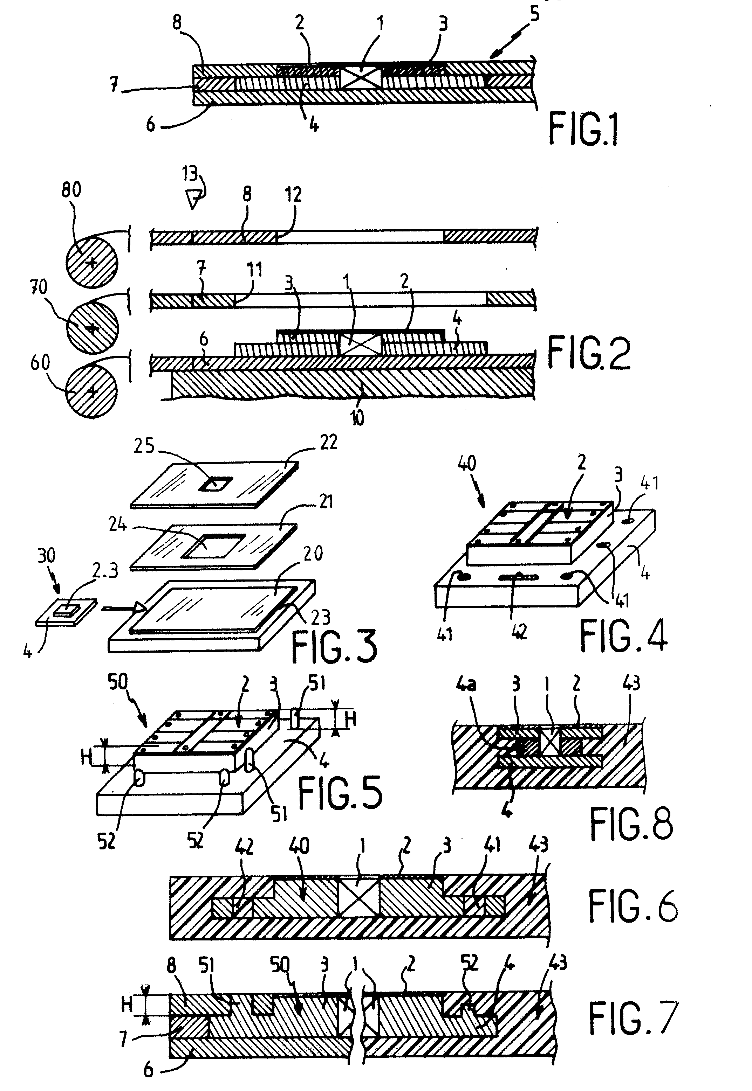

En se reportant à la figure 1, on voit un objet conforme à l'invention réalisé sous forme d'une carte qui comprend des éléments électroniques composés d'une partie active ou "circuit intégré" ou "puce" 1 et des contacts 2 de plus grande étendue, la liaison électrique entre le circuit intégré 1 et les contacts 2 étant assurés par des connexions de tout type. Il peut s'agir, par exemple, de parties conductrices prévues sur la face supérieure du circuit intégré 1 et qui correspondent fonctionnellement avec les contacts 2, le circuit intégré 1 étant collé directement aux contacts 2.

Ceux-ci sont délimités par des zones isolantes, ainsi que cela est connu en soi, et ils sont formés sur une plaquette isolante qui, si elle est très fine comme représenté sur les figures 1, 2, 4, 5 et 8, peut être renforcée par une plaque 3. A noter que le circuit intégré 1 est, évidemment, fixé aux contacts 2 et non à la plaque de renfort 3.

Un socle 4 qui a une plus grande étendue que celle des contacts 2 est fixé à ces derniers, soit directement, soit par l'intermédiaire de la plaque de renfort 3, celle-ci, d'ailleurs, n'étant qu'un complément mécanique éventuel, fait partie des contacts et devient absolument inutile, comme on le verra plus loin, si l'on prend soin de créer les contacts 2 sur une plaque suffisamment rigide et solide à elle seule. Le socle 4 est occlus dans la matière constitutive d'une carte 5, c'est-à-dire qu'il est entièrement dissimulé et n'apparaît sur aucune des faces de la carte 5.

Le socle 4 présente une ouverture centrale un peu plus grande que le circuit électronique 1, celui-ci étant situé dans l'ouverture centrale, protégé par le socle 4. Celui-ci est aussi rigide que possible et ne suit pas les mouvements de pliage éventuels de la carte. Son but est de s'opposer à tout prix à l'arrachage des contacts 2 et du circuit intégré 1. Certes, le socle 4 rigidifie la carte et empêche son pliage mais c'est précisément le but de l'invention que de préserver les éléments électroniques contre des atteintes qui pourraient venir de ces mauvais usages de la carte 5. Celle-ci est fabriquée en matériau flexible pour des raison pratiques, mais son usage en combinaison avec des appareils électroniques ne prévoit jamais son pliage.

L'expérience montre que l'extraction accidentelle des éléments électroniques se produit accidentellement par suite de mauvais traitements (quand la carte est gardée dans une poche de pantalon, notamment) et, bien entendu, les probabilités de tels accidents augmentent considérablement lorsque la carte est destinée à des emplois fréquents : plusieurs fois par jour lorsque la carte est destinée à donner accès à des locaux (parcs de stationnement de véhicules, ateliers protégés, etc.).

Cela signifie, en d'autres termes, que le socle 4 est entouré de tous côtés et que les contacts 2 se trouvent selon une surface relativement grande, coplanaire à la face de la carte 5. Sur la figure 1 on a prévu que cette structure était obtenue par superposition de plusieurs feuilles ou couches 6, 7 et 8.

Ces feuilles peuvent être stockées en bobine puis déroulées et être superposées après mise en place du circuit 1 sous les contacts 2 et exécution des connexions, puis fixation du socle 4 aux contacts 2-3.

La feuille 6 est continue, pleine, tandis que les feuilles 7 et 8 sont traversées de trous de dimensions sensiblement égales respectivement au socle 4 et à la plaque 3 qui est, rappelons-le, de même étendue que celle des contacts 2 puisqu'elle leur sert de renfort.

Sur la figure 2, on voit un schéma indiquant que la feuille 6 est stockée sur une bobine 60, la feuille 7 sur une bobine 70 et la feuille 8 sur une bobine 80.

La feuille 6 est mise en place au-dessus d'un support de tout type connu 10 et reçoit l'ensemble 1-2-3-4 que l'on positionne de manière précise.

La feuille 7 est déroulée de la bobine 70 avant ou après perçage d'un trou 11 de même étendue que le socle 4, la feuille 7 ayant la même épaisseur que ledit socle 4.

Ensuite, la feuille 8 est déroulée de la bobine 80 avant ou après perçage d'un trou 12 de même étendue que l'ensemble contacts 2-plaque 3, la feuille 8 ayant la même épaisseur que ces deux pièces superposées.

L'ensemble peut être terminé comme on le fait actuellement en fixant les feuilles 6, 7 et 8 par ramollissement et calandrage car les éléments électroniques résistent à des températures et des pressions nettement supérieures à celles qui sont nécessaires pour constituer la carte 5 comme on vient de le dire.

Les feuilles 6, 7, 8 sont coupées à l'alignement d'un repère 13, après quoi la carte peut être munie de mentions, décors, repères et analogues par une impression notamment sérigraphique.

Naturellement, il faut que les contacts 2 soient au niveau de la carte terminée et si lors de la fabrication de la carte les feuilles 6, 7 et 8 sont comprimées et perdent de l'épaisseur il faut tenir compte de cette perte.

De même, on tient compte du fluage éventuel de la matière constitutive des feuilles 6, 7, et 8 pour calculer aussi précisément que possible l'étendue des trous 11 et 12.

Sur la figure 3, on voit un autre procédé de fabrication qui consiste à découper tout d'abord des plaquettes 20, 21 et 22 au format de la carte terminée et à fabriquer celle-ci en plaçant la plaquette pleine 20 sur un support 23, puis à positionner sur la plaquette pleine 20 un ensemble 30, puis à placer la plaquette 21 percée d'un trou 24 sur la plaquette 20, le trou 24 entourant de très près le pourtour du socle 4, puis enfin à placer la plaquette 22 percée d'un trou 25 d'étendue sensiblement égale à celle des contacts 2-3 et inférieure à celle du socle 4.

La carte est ensuite terminée en fixant entre elles les plaquettes 20, 21 et 22 notamment comme on l'a expliqué plus haut en regard de la figure 2.

La carte terminée se présente comme celle de la figure 1 lorsqu'elle est vue en coupe.

Sur la figure 4, on a représenté un autre mode de réalisation de l'invention selon lequel les contacts 2 sont renforcés non plus par une plaque 3 mais par le socle 4 lui-même. En outre, le socle 4 est percé de trous.

On a représenté ici des trous ronds 41 et un trou ovale 42 pour montrer que la forme de ces trous peut être quelconque.

Cet ensemble 40 est destiné à être placé dans un moule et les trous 41 et ou 42 peuvent être utilisés comme repères de positionnement et de maintien de l'ensemble 40 dans le moule lors de l'injection, notamment en prévoyant dans le moule des ergots disposés de la même manière que les trous de repérage.

Ensuite, à la manière connue en soi, on injecte dans le moule une matière synthétique qui enrobe l'ensemble 40, et en particulier le socle 4, à l'exception des contacts 2 qui doivent rester en surface.

Sur la figure 6, on voit en coupe une carte ainsi obtenue et l'on observe que la matière synthétique 43, après injection, a pénétré dans les trous 41 et 42, de sorte que le socle 4 est positivement scellé dans la matière 43 elle-même.

L'ensemble 40 est véritablement ancré et ne pourrait être retiré que par destruction de la matière 43. Aucun mouvement relatif sensible n'est prévu entre le socle rigide 4 et la matière 43. Le socle 4 est la base de tout l'ensemble : le circuit 1 est fixé aux contacts 2-3, lesquels sont fixés au socle 4. Par conséquent, il doit s'opposer à tout effort d'arrachage exercé sur les contacts 2.

Sur la figure 5, on a représenté un autre mode de réalisation de l'invention selon lequel le socle 4 présente des reliefs. Il est aussi, dans cet exemple, le renfort des contacts 2 obtenus sur une feuille mince.

On a représenté ici d'une part des reliefs 51 de même hauteur H que celle de la partie centrale du socle 4 correspondant à la plaque 3 et des contacts 2 et d'autre part des reliefs 52 moins hauts pour montrer que la proéminence des reliefs peut varier.

Sur la moitié gauche de la figure 7, on a représenté une variante de réalisation selon laquelle l'objet support (une carte) est obtenu par superposition de trois feuilles 6, 7 et 8, comme cela a été décrit en regard des figures 1 et 2. Dans ce cas, la feuille 7 est percée de trous 11, comme celle des figures 1 et 2, afin d'épouser au plus près le contour du socle 4, tandis que la feuille 8 est percée de petits trous correspondant aux reliefs 51 en plus des trous 12 de même étendue que l'ensemble contacts 2-plaque 3.

Sur la moitié droite de la figure 7, on a représenté une variante de réalisation selon laquelle l'objet support (une carte) est obtenu par injection de matière synthétique 43 dans un moule, afin d'enrober l'ensemble 50, mais non les contacts 2 qui doivent rester en surface.

Comme dit plus haut en regard des figures 4 et 6, le socle 4 est positivement scellé dans la matière 43 elle-même.

Les reliefs 51 et/ou 52 peuvent être prévus sur une seule face du socle 4 ou sur les deux faces apposées. Si l'objet est obtenu par superposition de feuilles, la feuille de base 6 doit être percée de trous. Si l'objet est obtenu par moulage d'une matière 43, l'extrémité des reliefs 51 peut apparaître à l'extérieur ou être entièrement enrobée.

Naturellement, on pourrait utiliser le même procédé de fabrication par injection de matière synthétique dans un moule contenant déjà l'ensemble 50 sans pour autant prévoir de trous ou de reliefs pour le socle 4 mais on comprend aisément que la présence de ces trous ou reliefs est un facteur supplémentaire de robustesse et de sécurité.

L'important étant la solidité de la fixation du socle 4, on peut aussi prévoir qu'avant injection de matière synthétique, ce socle 4 soit revêtu d'un adhésif permettant de réaliser le socle 4 en métal solide, tout en assurant son collage à la matière synthétique de la carte 5.

En se reportant à la figure 8, on voit une variante de réalisation selon laquelle le socle 4 a une étendue sensiblement égale à celle de la plaque 3 mais, alors, une partie 4a de plus faible étendue sépare la plaque 3 du socle 4 afin de déterminer une gorge dans laquelle la matière 43 se coule pour sceller l'ensemble.

Il va de soi que l'on peut donner à cet ensemble une forme différente, dès lors que l'on atteint le même but qui est de créer une surface solidaire des éléments électroniques et s'opposant à l'extraction de ceux-ci par butée contre la matière constitutive de l'objet. Cet ancrage peut, par exemple, être obtenu en donnant aux éléments électroniques et au socle une forme générale de bobine.

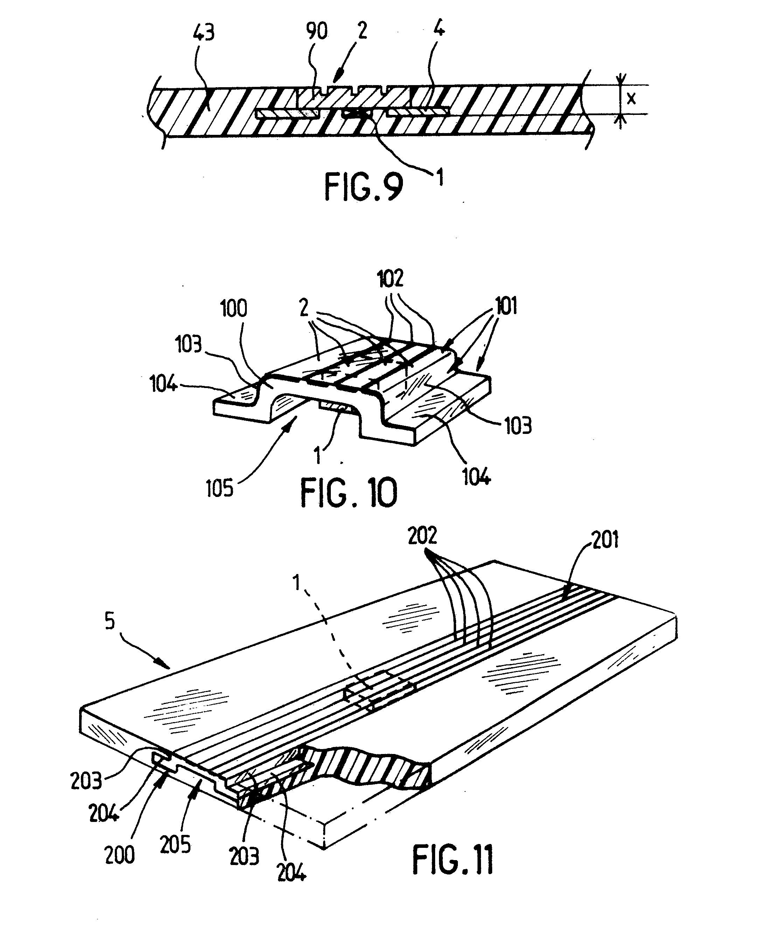

Sur la figure 9, on a représenté une variante probablement plus avantageuse dans la pratique, selon laquelle les contacts 2 sont obtenus sur une plaque 90, par exemple en métal, qui présente à elle seule les qualités recherchées de solidité et d'indéformabilité.

Le circuit intégré 1 est fixé directement à la plaque 90, c'est-à-dire aux contacts 2. Le socle 4 est constitué par une plaque telle qu'une rondelle, présentant une ouverture centrale dans laquelle est situé le circuit intégré 1. Cet ensemble est placé dans un moule pour l'injection d'une matière synthétique 43 qui, il faut le remarquer, enveloppe tout le socle 4 mais aussi pénètre dans l'espace qui subsiste entre le circuit intégré 1 et les bords de l'ouverture interne du socle 4. On réalise ainsi un véritable scellage des éléments électroniques et du socle. Bien entendu, comme toujours, les contacts 2 sont à la surface de la carte.

Comme le socle 4 est le support de tout l'ensemble, il faut évidemment qu'il soit solidement fixé aux contacts 2-3. L'expérience a montré qu'un adhésif de bonne qualité suffit à donner au montage la solidité requise. Cependant, il serait plus avantageux de réaliser en une seule pièce les contacts et le socle. Cela est possible en créant les contacts 2 sur une plaque dont l'épaisseur est égale à $x$, c'est-à-dire à l'épaisseur totale de la plaque 90 et su socle 4. Cette épaisseur est choisie pour que le circuit intégré 1 lui-même soit entouré par le socle 4.

En se reportant maintenant à la figure 10, on voit une variante de l'invention selon laquelle on réalise en une seule pièce les contacts et le socle. Pour cela, on part d'une plaque 100 portant sur l'une de ses faces un revêtement conducteur 101 et, selon tout procédé connu, on crée des lignes isolantes 102 afin de déterminer des bandes conductrices séparées constituant les contacts 2. Ensuite, on découpe la plaque transversalement au sens des lignes 102 pour obtenir un ensemble rectangulaire et on emboutit le tout pour lui donner une section en U renversé, c'est-à-dire une forme en volume ayant une face supérieure portant les contacts 2, deux flancs latéraux 103 et deux ailes 104 qui portent aussi le revêtement conducteur 101. L'espace médian inférieur 105 reçoit le circuit intégré 1 relié aux contacts 2 (bandes conductrices), tandis que les ailes 104 constituent un socle jouant le même rôle que le socle 4 précédemment décrit.

Cet ensemble est destiné à être associé à une carte, comme on l'a décrit plus haut : les contacts 2 doivent rester en surface, les flancs 103 protègent le circuit intégré 1 et les ailes 104 sont destinées à être occluses dans la matière de la carte.

Par souci de simplification, on peut partir d'une plaque 100 large que l'on coupe aussi parallèlement aux lignes 102 afin de la débiter en rectangles. C'est pourquoi, on peut créer un réseau de lignes 102 sur toute la surface de la plaque 100, de sorte que l'ensemble terminé présente de telles lignes 102 non seulement sur sa face supérieure mais aussi sur les flancs 103 ou les ailes 104.

Mais selon une autre variante qu'illustre la figure 11, on part d'un profilé continu 200, mis en forme par emboutissage ou par filage ou par tout autre procédé, pour qu'il présente aussi une face supérieure formée d'un revêtement conducteur 201, des lignes isolantes 202 et des bandes conductrices séparées constituant des contacts 2, ainsi que des flancs 203 déterminant un espace médian 205, et des ailes longitudinales 204. Ensuite, on place un circuit intégré 1 relié aux bandes conductrices ou contacts 2, et l'on incorpore le tout à une carte 5, ce qui peut se faire en continu, et l'on tronçonne l'ensemble ainsi obtenu, de sorte que le profilé 200 s'étend d'une extrémité à l'autre de la carte 5. Sur la figure 11, on voit que les extrémités du profilé 200 apparaissent sur les tranches de la carte 5. Ce montage présente des avantages marqués :

- le circuit intégré 1 peut être placé à n'importe quel endroit le long du profilé et l'on peut ainsi choisir son emplacement pour qu'il soit aussi bien protégé que possible, indépendamment des nécessités d'appui sur les contacts 2 pour l'interconnexion du circuit intégré 1 et d'appareils électroniques extérieurs;

- le circuit intégré 1 est parfaitement protégé car non seulement il est situé entre les flancs 203 mais il est aussi noyé dans la matière de la carte 5 qui emplit l'espace médian 205, et donc totalement immobilisé, scellé;

- le profilé 200 est retenu sur toute sa longueur et par ses deux côtés;

- la "lecture" de la carte 5 peut se faire en continu puisque les contacts s'étendent sur toute sa longueur, ce qui ouvre de nouvelles possibilités pour la conception d'appareils et de services nouveaux.

Naturellement, d'autres moyens peuvent être prévus : ailes longitudinales et transversales, profilé 200 moins long que la carte pour que ses extrémités soit enrobées, points d'ancrage répartis le long du profilé 200, etc.

En ce qui concerne la matière constitutive de la carte 5, on peut utiliser non seulement les matières synthétiques habituelles mais aussi du métal, des matériaux complexes ou composites, des feuilles assemblées ou l'injection de matériaux fusibles etc.

## Revendications

1- Objet (5) associé à des éléments électroniques tels que circuit intégré (1) et connexions, destinés à intervenir par interaction avec des appareils électroniques extérieurs, <u>caractérisé en ce que</u> les éléments électroniques sont reliés directement à des contacts (2-3) qui sont co-planaires entre eux et à une face de l'objet (5) et qui sont solidaires d'un socle rigide (4) devant être occlus dans la matière constitutive de l'objet (5), lesdits éléments électroniques étant ainsi reliés aux contacts (2), les contacts (2) solidaires du socle (4) et le socle (4) fixé à l'objet (5).

2- Objet selon la revendication 1, caractérisé en ce que les contacts proprement dits (2) font partie d'une feuille mince qui est renforcée par une plaque (3).

3- Objet selon la revendication 1, caractérisé en ce que les contacts (2) et le socle (4) sont en une seule pièce.

4- Objet selon la revendication 1, caractérisé en ce que les contacts (2) sont situés sur la face supérieure d'un ensemble conformé pour présenter des flancs (103-203) déterminant un espace inférieur médian (105-205) dans lequel un circuit intégré (1) doit être placé et des ailes (104-204) constituant ensemble un socle.

5- Objet selon la revendication 1, caractérisé en ce que les contacts (2) s'étendent sur toute la longueur de l'objet (5) sous forme de bandes conductrices linéaires.

6- Objet (5) selon la revendication 1, caractérisé en ce que le socle (4) a une étendue plus grande que celle du ou des contacts (2).

7- Objet (5) selon la revendication 1, caractérisé en ce que le socle (4) est séparé du ou des contacts (2) par une partie (4a) de plus faible étendue.

8- Objet selon la revendication 1, caractérisé en ce qu'il est constitué par plusieurs feuilles assemblées (6-7-8) dont une continue (6) est située sous l'ensemble éléments électronique (1-2-3)-socle (4) et une autre (8), est traversée d'un trou (12) de même étendue que celle des contacts (2) et est située au-dessus du socle (4).

9- Objet selon la revendication 1, caractérisé en ce qu'étant constitué en matière synthétique, l'ensemble éléments électroniques-socle (40) est noyé dans la masse (43) de ladite matière synthétique.

10- Objet selon la revendication 1, caractérisé en ce que le socle (4) est traversé par au moins un trou (41-42).

11- Objet selon la revendication 1, caractérisé en ce que le socle (4) est muni d'au moins un relief (51-52).

12- Objet selon la revendication 10, caractérisé en ce que l'un au moins (51) des reliefs a une hauteur (H) sensiblement égale à celle des contacts (2-3).

13- Procédé pour la fabrication d'un objet selon la revendication 1 ci-dessus, caractérisé en ce que l'on constitue un ensemble (40-50) en associant au moins un composant tel qu'un circuit intégré (1), des contacts extérieurs (2) et un socle (4) puis que l'on positionne cet ensemble (40-50) dans un moule, de telle sorte que la surface extérieure des contacts (2) soit contre une paroi du moule, puis que l'on injecte, de manière connue en soi, une matière synthétique (43) dans le moule pour enrober l'ensemble (40) à l'exception de la face extérieure des contacts (2), puis que l'on procède éventuellement à des vérifications électroniques, puis que l'on termine l'objet notamment par une impression de mentions, décors, repères et analogues.

0246973

FIG.1

FIG.2

FIG.3

FIG.4

FIG.5

FIG.8

FIG.6

FIG.7

0246973

FIG.9

FIG. 10

FIG.11

Office européen
des brevets

**RAPPORT DE RECHERCHE EUROPEENNE**

Numéro de la demande

EP 87 40 1135

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 337 381 (C. HONEYWELL BULL)<br>* Page 3, lignes 28-34; page 7, lignes 7-11; page 9, lignes 30-36; page 13, lignes 7-23; figures 4,11 * | 1-3,6-10,13 | G 06 K 19/06 |
| Y | EP-A-0 116 148 (GAO)<br><br>* Figures 2-7; revendication 1 * | 1-3,6,8,9,13 | |
| A | | 4 | |
| A | EP-A-0 128 822 (FLONIC S.A.)<br><br>* Figure 12; revendication 1 * | 1-3,6,8,9,13 | |
| A,D | FR-A-2 538 930 (SEIICHIRO)<br><br>* Page 3, lignes 19-23; page 3, ligne 28; page 4, lignes 17-19; figures 2,4,6,7 * | 1,2,6,8,9,11 | **DOMAINES TECHNIQUES RECHERCHES (Int. Cl.4)**<br><br>G 06 K |
| Y,D | EP-A-0 071 311 (PHILIPS)<br>* Page 5, lignes 19-21; figure 2 * | 7 | |
| Y,D | FR-A-2 503 902 (GAO)<br>* Figure 2; page 5, lignes 10-20 * | 10 | |

--- -/-

Le présent rapport de recherche a été établi pour toutes les revendications

| Lieu de la recherche | Date d'achèvement de la recherche | Examinateur |
|---|---|---|
| LA HAYE | 19-08-1987 | HENROTTE I. |

| DOCUMENTS CONSIDERES COMME PERTINENTS | | | Page  2 | |
|---|---|---|---|---|
| **Catégorie** | **Citation du document avec indication, en cas de besoin, des parties pertinentes** | **Revendication concernée** | **CLASSEMENT DE LA DEMANDE (Int. Cl.4)** | |
| A | PATENT ABSTRACTS OF JAPAN, vol. 7, no. 64 (P-183)[1209], 17 mars 1983; & JP-A-57 209 578 (FUJITSU K.K.) 22-12-1982<br>* Résumé * | 4 | | |
| | ----- | | | |
| | | | **DOMAINES TECHNIQUES RECHERCHES (Int. Cl.4)** | |

Le présent rapport de recherche a été établi pour toutes les revendications

| Lieu de la recherche | Date d'achèvement de la recherche | Examinateur |
|---|---|---|
| LA HAYE | 19-08-1987 | HENROTTE I. |